# EUROPEAN PATENT SPECIFICATION

(11) **EP 1 657 283 B1**
(45) Date of publication and mention of the grant of the patent: **07.11.2007**
(21) Application number: 05025044.8
(22) Date of filing: 16.11.2005
(51) Int. Cl.: C09C 1/30, C01B 33/149

(54) **Process for producing hydrophobic silica powder**
Verfahren zur Herstellung eines hydrophoben Kieselsäurepulvers
Procédé pour la production de poudre de silice hydrophobe

(30) Priority: 16.11.2004 JP 2004331319
(43) Date of publication of application: 17.05.2006
(73) Proprietor: Nissan Chemical Industries, Ltd., Chiyoda-ku, Tokyo 101-0054 (JP)
(72) Inventor: Yoshitake, Keiko c/o Nissan Chemical Ind., Ltd., Sodegaura-shi Chiba 299-0266 (JP); Kato, Hirokazu c/o Nissan Chemical Ind., Ltd., Sodegaura-shi Chiba 299-0266 (JP)
(74) Representative: HOFFMANN EITLE

(56) References cited:
- EP-A- 0 982 268
- EP-A- 1 048 696
- DE-A1- 2 403 783
- US-B1- 6 183 867

## Description

### BACKGROUND OF THE INVENTION

### 1. Field of the Art

The present invention relates to a process for producing a hydrophobic silica powder having an excellent dispersibility by using an aqueous silica sol as a starting material.

### 2. Description of the Related Art

Thus far, as a silica base material used for production of hydrophobic silica powder, precipitated silica and fine silica produced by flame thermal decomposition of chlorosilane (generally called fumed silica) have been frequently used. The methods for hydrophobic treatment include a method for hydrophobic treatment comprising bringing a silica powder into contact with a hydrophobicity-affording agent such as a surfactant or silicone oil, or a gas of silylating agent such as alkylhalogeno silane, alkylalkoxy silane, alkyldisilazane or the like, or a method for hydrophobic treatment comprising bringing a silica powder into contact with a silylating agent in a hydrophilic organic solvent mixed with water.

However, in any methods for hydrophobic treatment, in case where a precipitated silica or a fumed silica is used, a silica base material itself is aggregated, and thus it was impossible to obtain a hydrophobic silica powder having an excellent dispersibility.

In fact, the following hydrophobic treatments by using a precipitated silica or a fumed silica are disclosed. Any methods did not disclose a relation between primary particle diameter of a silica base material and aggregated particle diameter after hydrophobic treatment, and obtain no hydrophobic silica powder having a high dispersibility.

JP-A-2000-327321 (2000) disclosed a process for producing a hydrophobic precipitated silica comprising bringing an aqueous suspension of hydrophilic precipitated silica into contact with a catalytic amount of an acid and an organosilane compound in the presence of water-miscible organic solvent in an amount sufficient for promoting the reaction of the organic silicon compound with the hydrophilic precipitated silica.

JP-A-07-286095 (1995) disclosed a process for obtaining a silica having a mean primary particle diameter of 5 to 50 nm, a surface treated with hexamethyldisilazane to block 40% or more of silanol groups on the particle surface, and a residual silanol group concentration of 1.5/nm² or less.

JP-A-2000-256008 (2000) disclosed a hydrophobic fumed silica and a production process thereof characterized in that a fumed silica is subjected to a hydrophobic treatment with an organic silicon compound such as hexamethyldisilazane, and the resulting hydrophobic fumed silica has a bulk density of 80 to 300 g/l, OH group per unit surface of 0.5/nm² or less, and aggregated particles having a particle diameter of 45 µm or more in a concentration of 2000 ppm or less.

JP-A-2002-256170 (2002) disclosed a process for producing a hydrophobic silica powder characterized by treating a fumed silica with polysiloxane and then treating with a trimethyl silylating agent.

JP-A-2004-168559 (2004) disclosed a highly dispersible, hydrophobic silica powder and a production process thereof characterized by performing a primary surface treatment with a silicone oil treatment agent, a disintegration after the primary surface treatment, and a secondary surface treatment with an alkyl silazane treatment agent after the disintegration.

On the other hand, methods are also known by using a silica sol having a high dispersibility as a silica base material for a starting material to make it hydrophobic. A hydrophobic silica powder is obtained by dispersing a silica sol in an organic solvent such as an alcohol, reacting with a silylating agent such as an alkylhalogeno silane, an alkylalkoxy silane, an alkyl disilazane or the like and then removing the organic solvent. In these methods, as the hydrophobic reaction is carried out in an organic solvent, these methods have disadvantages that a step of producing a sol dispersed in an organic solvent is complicated, the removal of a large amount of the organic solvent is required after the reaction, and the like. In addition, the hydrophobic treatment with an alkylhalogeno silane has a disadvantage that corrosive acids are produced as by-products. An alkylalkoxy silane has a slightly low reactivity, a dialkoxy silane or trialkoxy silane tends to cause a condensation reaction, and the condensation reaction often causes cross-linking reaction between particles. Therefore, it is difficult to obtain any hydrophobic silica powder having a high dispersibility. It is also difficult to remove self-condensates of alkoxy silane. Although an alkyl disilazane has a relatively high reactivity and generates no corrosive gas, in case where the reaction therewith is carried out in an alcohol, a hydrophobicity-affording agent and the alcohol are reacted, and thus the method has a problem that it is difficult to raise a rate of changing into hydrophobicity if a large amount of disilazane is not added. Hereinafter, examples of disclosed arts are mentioned.

JP-A-58-145614 (1983) disclosed a process for producing a silica powder having C₁₋₃₆silyl groups bonded on the surface of colloidal silica in a rate of 1 to 100 per surface area 10 nm², re-dispersiblity in an organic solvent, comprising adding a silylating agent in an organo silica sol having a water content of 10% or less, reacting each other and then distilling off the solvent.

JP-A-2000-080201 (2000) disclosed a process for producing a hydrophobic treated colloidal silica having a mean particle diameter of 4 nm or more, comprising adding a hydrophilic colloidal silica it in a mixed solvent of concentrated hydrochloric acid, isopropanol and hexamethyldisiloxane, extracting with a hydrophobic organic solvent, refluxing under heating, and then adding a silane compound, and refluxing under heating.

JP-A-2000-044226 (2000) disclosed a process for producing a surface-treated silica, comprising hydrolyzing a tetraalkoxy silane compound with a basic compound to prepare a aqueous hydrophilic fine silica dispersion and removing alcohol, then subjecting the fine silica to hydrophobic treatment with alkyltrialkoxy silane compound, substituting the solvent by a ketone solvent, triorganosilylating the reactive groups remaining on the surface of the fine silica with a silazane compound or a trialkylalkoxy silane compound, and finally distilling off the solvent under a reduced pressure.

JP-A-03-187913 (1991) disclosed a process for producing a silica powder excellent in dispersibility the surface of which is silylated, comprising reacting a methanol silica sol obtained by hydrolyzing an alkyl silicate in methanol with a trimethyl silylating agent added in an amount of 5 mol% or more based on 1 mol of SiO₂, and then distilling off excess trimethyl silylating agent and the dispersion solvent. For example, the hydrophobic silica powder is obtained by adding methoxy trimethyl silane in an amount of 20 mol% based on 1 mol of SiO₂, to silica particles dispersion obtained by hydrolyzing tetramethoxy silane in methanol in the presence of aqueous ammonia, recovering excess silylating agent and drying.

US 6 183 867 relates to silicon dioxide which bears partially or fully silylated polysilicic acid chains on its surface and to a process for its preparation.

### SUMMARY OF THE INVENTION

An object of the present invention is to provide a process for efficiently producing a hydrophobic silica powder excellent in dispersibility.

The process for producing a hydrophobic silica powder according to the present invention comprises the steps for hydrophobic treatment of:
(A): adding to an aqueous silica sol containing hydrophilic colloidal silica having a specific surface area of 5.5 to 550 m²/g,
   a disilazane compound represented by formula (1)

   (R¹₃Si)₂NH (1)

   wherein each R¹ is C₁₋₆alkyl group or phenyl group that is selected independently of one another, in an amount of 0.1 to 10 mmol per surface area 100 m² of the hydrophilic colloidal silica, to obtain a first mixture of the aqueous silica sol and the disilazane compound;
(B): phase-separation step of adding to the hydrophobic treated colloidal silica obtained in step (A)
   a disilazane compound represented by formula (1)

   (R¹₃Si)₂NH (1)

   wherein each R¹ is C₁₋₆alkyl group or phenyl group that is selected independently of one another,
   a siloxane compound represented by formula (2)

   R²₃SiO(R²₂SiO)ₙSiR²₃ (2)

   wherein each R² is C₁₋₆alkyl group or phenyl group that is selected independently of one another, and n is an integer of 0 to 3, or a mixture thereof, in an amount of 1 to 100 mass parts per 100 mass parts of the hydrophilic colloidal silica used as a starting material, to obtain a second mixture of the hydrophobic treated colloidal silica and the disilazane compound, the siloxane compound or the mixture thereof; and heating the mixture at a temperature of 50 to 100°C for aging it to make an organic phase containing the hydrophobic treated colloidal silica separate from an aqueous phase.

The preferable modes of the present invention are as follows:
the process for producing a hydrophobic silica powder
   - wherein the aqueous silica sol has a SiO₂ concentration of 5 to 55 mass%;
   - wherein hexamethyldisilazane is used as the disilazane compound;
   - after the steps for hydrophobic treatment, further comprising the steps for phase-separation of:
      adding to the obtained hydrophobic treated colloidal silica,
      a disilazane compound represented by formula (1)

         (R¹₃Si)₂NH (1)

         wherein each R¹ is C₁₋₆alkyl group or phenyl group that is selected independently of one another,
      a siloxane compound represented by formula (2)

         R²₃SiO(R²₂SiO)ₙSiR²₃ (2)

         wherein each R² is C₁₋₆alkyl group or phenyl group that is selected independently of one another, and n is an integer of 0 to 3, or a mixture thereof, in an amount of 1 to 100 mass parts per 100 mass parts of the hydrophilic colloidal silica used as a starting material, to obtain a second mixture of the hydrophobic treated colloidal silica and the disilazane compound, the siloxane compound or the mixture thereof; and
      heating the mixture at a temperature of 50 to 100°C for aging it to make an organic phase containing the hydrophobic treated colloidal silica separate from an aqueous phase. In this mode, hexamethyldisiloxane is preferably used as the disilazane compound, the siloxane compound, or the mixture thereof.

The embodiment of this mode is as follows:
the process for producing a hydrophobic silica powder, comprising the steps (A), (B) and (C) of:
   (A): hydrophobic treatment step of adding to an aqueous silica sol containing hydrophilic colloidal silica having a specific surface area of 5.5 to 550 m²/g,
      a disilazane compound represented by formula (1)

      (R¹₃Si)₂NH (1)

      wherein each R¹ is C₁₋₆alkyl group or phenyl group that is selected independently of one another, in an amount of 0.1 to 10 mmol per surface area 100 m² of the hydrophilic colloidal silica, to obtain a first mixture of the aqueous silica sol and the disilazane compound, and heating the mixture at a temperature of 50 to 100°C for aging it to obtain a slurry as dispersion of hydrophobic treated colloidal silica;
   (B): phase-separation step of adding to the hydrophobic treated colloidal silica obtained in the step (A),
      a siloxane compound represented by formula (2)

      R²₃SiO(R²₂SiO)ₙSiR²₃ (2)

      wherein each R² is C₁₋₆alkyl group or phenyl group that is selected independently of one another, and n is an integer of 0 to 3, in an amount of 1 to 100 mass parts per 100 mass parts of the hydrophilic colloidal silica used as a starting material, to obtain a second mixture of the hydrophobic treated colloidal silica and the siloxane compound; and
      heating the mixture at a temperature of 50 to 100°C for aging it to make an organic phase containing the hydrophobic treated colloidal silica separate from an aqueous phase; and
   (C): drying step of drying the organic chase containing the hydrophobic treated colloidal silica obtained in the steps (B).

The preferable embodiments of this modes in the present invention are as follows:
- wherein the aqueous silica sol has a SiO₂ concentration of 5 to 55 mass% in the step (A);
- wherein hexamethyldisilazane is used as the disilazane compound in the step (A);
- wherein hexamethyldisiloxane is used as the siloxane compound in the step (B).

Aqueous silica sols having several particle diameters and particle forms are applicable to the process of the present invention. The use of an aqueous silica sol having a high dispersibility as a silica base material makes possible to provide a hydrophobic silica powder having a high dispersibility even after hydrophobic treatment. In addition, the use of a disilazane compound having a slight water solubility as a hydrophobicity-affording agent causes no dilution of the hydrophobicity-affording agent in water, and thereby making possible to bring the hydrophobicity-affording agent having a high concentration into contact with the silica base material. Further, the phase-separation between an organic phase containing the hydrophobic treated colloidal silica and an aqueous phase after the hydrophobic treatment makes possible to take out silica subjected to hydrophobic treatment through a simple process such as filtering or the like.

The process of the present invention makes possible to produce hydrophobic silica powder by using a simple apparatus and a simple hydrophobic treatment process. The hydrophobic silica powder obtained by the present invention is useful for external agents for toner used for electrophotography, internal agents used for resins, hard coat agents, water repellency-affording agents, flame retardants and the like.

### DESCRIPTION OF THE PREFERRED EMBODIMENTS

The aqueous silica sol used in the present invention is a hydrophilic colloidal silica having a specific surface area of 5.5 to 550 m²/g, preferably 5.5 to 300 m²/g. It is preferable that the aqueous silica sol has a SiO₂ (silica) concentration of 5 to 55 mass%.

The aqueous silica sol can be produced according to any known process by using for example water glass as a starting material. The particle diameter of the hydrophilic colloidal silica is calculated through the equation: D (nm) = 2720/S wherein S (m²/g) is a specific surface area determined based on BET method. Therefore, the particle diameter of the hydrophilic colloidal silica is 5 nm or more, preferably 9 nm or more. In case where the aqueous silica sol having a particle diameter less than 5 nm is used, it is difficult to increase the concentration of the aqueous silica sol, and further the hydrophobic treatment requires a larger amount of silylating agent per silica unit mass.

The hydrophilic colloidal silica content of 5 mass% or less is not preferable because the production efficiency of the hydrophobic silica powder is lowered, the contact efficiency with the disilazane compound is lowered due to low silica concentration in the reaction system, and the amount of the disilazane compound required per the surface area of the hydrophilic colloidal silica is increased. In case where the hydrophilic colloidal silica content is 55 mass% or more, it becomes difficult to stir and proceed homogeneous hydrophobic treatment as the viscosity is remarkably increased in the hydrophobic treatment process.

An aqueous silica sol containing no free alkali metal ion is preferable to the aqueous silica sol. The use of an alkaline aqueous silica sol containing alkali metal ion may cause a lowering in the reactivity of the silylating agent with the silanol group on the surface of the hydrophilic colloidal silica, or a lowering in the reaction rate of the silylating agent, or affect adverse effect on the hydrophobicity of the hydrophobic silica powder. The aqueous silica sol containing no free alkali metal ion can be obtained for example by removing free Na ion from an alkaline silica sol containing Na ion through cation exchange or the like. In addition, a silica sol stabilized with NH₃, amine or the like can be used.

The hydrophobicity-affording agents used in the present invention are disilazane compounds, and hexamethyldisilazane is preferable. The disilazane compound is added to the aqueous silica sol in an amount of 0.1 to 10 mmol, preferably 0.3 to 5 mmol per surface area 100 m² of the hydrophilic colloidal silica. Excess disilazane compound is not consumed for hydrophobic reaction, and is inefficient also in economic view. In addition, shortage of the disilazane compound causes a lowering in hydrophobicity.

The addition of the disilazane compound to the aqueous silica sol is preferably carried out with strong stirring in order to enhance contact between the hydrophilic colloidal silica and the disilazane compound. As the disilazane compound is a slightly water soluble compound, a weak stirring may cause insufficient contact and lead to heterogeneous hydrophobic reaction.

The temperature of the aqueous silica sol on the addition of the disilazane compound is not specifically limited. However, when the disilazane compound is added to the aqueous silica sol, aggregation occurs with the progress of the reaction and the viscosity is remarkably increased temporarily. Thus, it is preferable that temperature of the aqueous silica sol on the addition of the disilazane compound is 50°C or less at which the reaction rate is gentle, in order to perform a homogeneous hydrophobic treatment by adding a enough amount of the disilazane compound before the viscosity is increased.

It is preferable to heat the first mixture of the aqueous silica sol and the disilazane compound to a temperature of 50 to 100°C after the addition of the disilazane compound for aging as enhancing hydrophobic reaction by stirring until the hydrophobic treated silica is dispersed in a state of slurry in an aqueous system.

Further, after the steps for hydrophobic treatment, the phase-separation process is performed by adding to the obtained hydrophobic treated colloidal silica, a disilazane compound represented by formula (1), or a siloxane compound represented by formula (2), or a mixture thereof, in an amount of 1 to 100 mass parts per 100 mass parts of the hydrophilic colloidal silica used as a starting material, to obtain the second mixture of the hydrophobic treated colloidal silica and the disilazane compound, the siloxane compound or the mixture thereof; and heating the mixture at a temperature of 50 to 100°C for aging it to make an organic phase containing the hydrophobic treated colloidal silica separate from an aqueous phase. This process facilitates the separation with the aqueous phase after the hydrophobic treatment. When the siloxane compound is added before dispersing in a state of slurry, water content contained in the organic phase containing the hydrophobic colloidal silica increases, and it often becomes difficult to separate into an organic phase and an aqueous phase after the hydrophobic treatment. When the disilazane compound used in the hydrophobic treatment step is added in excess, it reacts with water to yield disiloxane that can act as an organic phase in the phase-separation.

The amount of the disilazane compound, the disiloxane compound, or the mixture thereof added to the colloidal silica after the hydrophobic treatment is 1 to 100 mass parts, preferably 5 to 50 mass parts, more preferably 10 to 40 mass parts per 100 mass parts of the hydrophilic colloidal silica as a starting material. When the added amount of the disilazane compound, the disiloxane compound, or the mixture thereof is small, insufficient phase-separation may occur and the hydrophobic colloidal silica may remain a state of slurry. When the added amount is much, water content contained in the organic phase containing the hydrophobic colloidal silica increases, and it often becomes difficult to perform phase-separation, and the aggregated particle diameter often becomes large when the hydrophobic silica powder is dispersed in an organic solvent. After the addition of the disilazane compound, the disiloxane compound, or the mixture thereof, it is preferable to stimulate phase-separation treatment by heating at 50 to 100°C for aging.

As the siloxane compound used in the phase-separation step, siloxane compounds having a boiling point of 150°C or less are preferable from the standpoint of the ease of removal in the drying step, and specifically hexamethyldisiloxane is the most preferable. In addition, the reason that hexamethyldisiloxane is preferable includes that in case where hexamethyldisilazane is used as a hydrophobic-affording agent, as remaining hexamethyldisilazane is hydrolyzed to be present as hexamethyldisiloxane, the hexamethyldisiloxane can be reused by recovering it in the drying step of the organic phase containing the hydrophobic treated colloidal silica.

After the hydrophobic treatment, separation step from the aqueous phase is not specifically limited, but the organic phase containing the hydrophobic treated colloidal silica and the aqueous phase can be separated by any known methods. For example, the methods include filtration, a phase-separation, distillation-out of the aqueous phase.

As the obtained organic phase containing the hydrophobic treated colloidal silica contains water content and siloxane compounds, the organic phase from which the aqueous phase has been separated is dried in the drying step. The drying method includes known drying methods such as methods by use of a hot-air dryer, a dryer of microwave system, a vacuum dryer, a spray dryer or the like.

Further, the dried hydrophobic silica can be ground with a mill for powder or the like to obtain hydrophobic silica in a form of powder. As the method for grinding, dry grinding methods by use of for example a vibratory grinding mill, a ball mill, an attritor or the like can be applied. In this grinding step, dispersed particle diameter when the hydrophobic silica is dispersed in an organic solvent is not specifically varied.

### Examples

### Example 1

A commercially available acidic aqueous silica sol (trade name: SNOWTEX (registered trade mark)-O, manufactured by Nissan Chemical Industries, Ltd., SiO₂ concentration: 20 mass%, pH 3.0, particle diameter : 12 nm) was concentrated on a rotary evaporator to a SiO₂ concentration of 33% to prepare a concentrated acidic aqueous silica sol. Then, in a 2L-glass reactor equipped with a stirrer, a dropping funnel, a condenser and a thermometer, 180 g of hexamethyldisilazane was added dropwise in 1250 g of the concentrated acidic aqueous silica sol with strong stirring, and a colloidal silica in the silica sol was aggregated to lose flowability. After the completion of dropwise addition, stirring was continued for 1 hour and the aggregated silica was dispersed in water to obtain a slurry as a dispersion of hydrophobic treated colloidal silica. Then, 120 g of hexamethyldisilazane was added dropwise, a mixture of the silica sol and hexamethyldisilazane was heated at 60°C for aging for 1 hour to obtain a hydrophobic treated colloidal silica. An organic phase containing the hydrophobic treated colloidal silica and an aqueous phase were separated through Buchner funnel, and the obtained organic phase containing the hydrophobic treated colloidal silica was dried at 150°C to obtain 412 g of granular hydrophobic silica powder. The obtained hydrophobic silica powder was re-dispersed in several organic solvents such as methyl ethyl ketone or the like in a state of sol.

### Example 2

To 1000 g of a concentrated acidic aqueous silica sol (SiO₂ concentration: 33 mass%, pH 3.0, particle diameter 12 nm) prepared by using the reaction apparatus and method similar to those in Example 1, 84 g of hexamethyldisilazane was added dropwise with strong stirring, and a colloidal silica in the silica sol was aggregated to lose flowability. After the completion of dropwise addition, stirring was continued for 0.5 hour and the aggregated silica was dispersed to obtain a slurry as a dispersion of hydrophobic treated colloidal silica. Then, 100 g of hexamethyldisiloxane was added dropwise to allow to separate an organic phase containing the hydrophobic treated colloidal silica from an aqueous phase. Then, a mixture of the silica sol and hexamethyldisilazane was heated at 80 to 90°C for aging for 2 to 3 hours. The organic phase containing the hydrophobic treated colloidal silica and the aqueous phase were separated through Buchner funnel, and the obtained organic phase containing the hydrophobic treated colloidal silica was dried at 120°C. Then, the resulting dried hydrophobic silica was ground with a mill for powder, and then dried 200°C to obtain 330 g of hydrophobic silica powder. The obtained hydrophobic silica powder was re-dispersed in several organic solvents such as methyl ethyl ketone or the like in a state of sol.

### Example 3

The procedures similar to those in Example 2 were performed except that 75 g of hexamethyldisilazane was added dropwise with strong stirring in 1000 g of an acidic aqueous silica sol obtained by diluting a commercially available acidic aqueous silica sol (trade name: SNOWTEX (registered trade mark)-O-40, manufactured by Nissan Chemical Industries, Ltd., SiO₂ concentration: 40 mass%, pH 3.0, particle diameter: 22 nm) to a SiO₂ concentration of 30 mass%, to obtain 300 g of a hydrophobic silica powder. The obtained hydrophobic silica powder was re-dispersed in several organic solvents such as methyl ethyl ketone or the like in a state of sol.

### Example 4

The procedures similar to those in Example 2 were performed except that 20 g of hexamethyldisilazane was added dropwise with stirring in 1000 g of an acidic aqueous silica sol (SiO₂ concentration: 39 mass%, pH 2.5, particle diameter: 80 nm), to obtain 390 g of a hydrophobic silica powder. The obtained hydrophobic silica powder was re-dispersed in several organic solvents such as methyl ethyl ketone or the like in a state of sol.

### Example 5

The procedures similar to those in Example 2 were performed except that 60 g of hexamethyldisilazane was used, to obtain 330 g of a hydrophobic silica powder. The obtained hydrophobic silica powder was re-dispersed in several organic solvents such as methyl ethyl ketone or the like in a state of sol.

### Example 6

The procedures similar to those in Example 2 were performed except that 50 g of hexamethyldisiloxane was used, to obtain 330 g of a hydrophobic silica powder. The obtained hydrophobic silica powder was re-dispersed in several organic solvents such as methyl ethyl ketone or the like in a state of sol.

### Comparative Example 1

To 1000 g of a concentrated acidic aqueous silica sol (SiO₂ concentration: 33 mass%, pH 3.0, particle diameter: 12 nm) prepared by using the reaction apparatus and method similar to those in Example 1, 110 g of trimethylmethoxysilane was added dropwise with strong stirring, and after the completion of dropwise addition, stirring was continued for 0.5 hour. Then, a mixture of the silica sol and trimethylmethoxysilane was heated at 50 to 60°C for aging as enhancing hydrophobic reaction to be changed to hydrophobic treated colloidal silica in a state of paste. Then, 100 g of hexamethyldisiloxane was added dropwise, and the contents were heated at 80 to 90°C for aging for 2 to 3 hours. However, the hydrophobic treated colloidal silica in a state of paste remained unchanged at it was, and it was not separated into an organic phase containing hydrophobic treated colloidal silica and an aqueous phase. The hydrophobic treated colloidal silica in a state of paste was dried at 120°C, ground with a mill for powder, and then dried 200°C to obtain 330 g of hydrophobic silica powder. The obtained hydrophobic silica powder was not re-dispersed in organic solvents such as methyl ethyl ketone or the like in a state of sol, but suspended therein.

### Evaluation

### Analytical method of hydrophobic silica powder

The carbon content of the obtained hydrophobic silica powder was measured with CHNS/O analyzer (PE 2400 series II, manufactured by Perkin Elmer Inc.). The number of trimethylsilyl groups per unit surface area of hydrophobic silica powder (unit: /nm²) was calculated according to the following equation (α):
A: trimethylsilyl group-content (mass%) = carbon content (mass%) x (73.19/36.03);
B: number of trimethylsilyl groups per 1 g of hydrophobic silica powder = 6.02 x 10²³ x (A/73.19) x 10⁻²;
C: surface area (nm²) per 1 g of hydrophobic silica powder = specific surface area of hydrophobic silica powder (m²/g) x 10¹⁸ x solid content (mass%) x 10⁻²;
The number of trimethylsilyl groups per unit surface area of hydrophobic silica powder (unit: /nm²) = B/C (α).
In the meanwhile, the solid content means calcination residue obtained by calcining the obtained hydrophobic silica powder at 800°C.

The obtained hydrophobic silica powder was dispersed in methyl ethyl ketone and the dispersed particle diameter was measured based on dynamic light scattering method (sub-micron particle analyzer model N4, manufactured by Beckman Coulter Inc.).

The results of the evaluation are shown in Table 1.

**Table 1**

| | Molar number of hexamethyl-disilazane added per surface area 100 m² of hydrophilic colloidal silica (mmol) | Amount of hexamethyl-disiloxane added to hydrophilic colloidal silica (mass%) | Carbon content in hydrophobic silica powder (mass%) | Number of trimethylsilyl groups per unit surface area of hydrophobic silica powder (/nm²) | Dispersed particle diameter (nm) |
|---|---|---|---|---|---|
| Example 1 | 2.0 | 0 | 3.20 | 2.5 | 125 |
| Example 2 | 0.7 | 30 | 3.37 | 2.6 | 120 |
| Example 3 | 1.2 | 33 | 1.72 | 2.4 | 83 |
| Example 4 | 0.9 | 25 | 0.56 | 2.5 | 150 |
| Example 5 | 0.5 | 30 | 3.30 | 2.3 | 230 |
| Example 6 | 0.7 | 15 | 3.12 | 2.2 | 305 |
| Comparative Example 1 | 1.4 (trimethylsilyl group) | 30 | 1.64 | 1.1 | * |

| | | | | | |
|---|---|---|---|---|---|
| * The sample of Comparative Example 1 has a low dispersibility in methyl ethyl ketone, and it was suspended therein. Therefore, the dispersed particle diameter could not be measured. | | | | | |

As mentioned above, the process of the present invention makes possible to produce a hydrophobic silica powder by using a simple apparatus and a simple hydrophobic treatment process. The hydrophobic silica powder obtained by the present invention is useful for external agents for toner used for electrophotography, internal agents used for resins, hard coat agents, water repellency-affording agents, flame retardants and the like.

## Claims

1. A process for producing a hydrophobic silica powder, comprising the steps (A) and (B) of:
(A): hydrophobic treatment step of adding to an aqueous silica sol containing hydrophilic colloidal silica having a specific surface area of 5.5 to 550 m²/g,
a disilazane compound represented by formula (1)
(R¹₃Si)₂NH (1)
wherein each R¹ is C₁₋₆alkyl group or phenyl group that is selected independently of one another, in an amount of 0.1 to 10 mmol per surface area 100 m² of the hydrophilic colloidal silica, to obtain a first mixture of the aqueous silica sol and the disilazane compound;
(B): phase-separation step of adding to the hydrophobic treated colloidal silica obtained in step (A)
a disilazane compound represented by formula (1)
(R¹₃Si)₂NH (1)
wherein each R¹ is C₁₋₆alkyl group or phenyl group that is selected independently of one another,
a siloxane compound represented by formula (2)
R²₃SiO(R²₂SiO)ₙSiR²₃ (2)
wherein each R² is C₁₋₆alkyl group or phenyl group that is selected independently of one another, and n is an integer of 0 to 3, or a mixture thereof, in an amount of 1 to 100 mass parts per 100 mass parts of the hydrophilic colloidal silica used as a starting material, to obtain a second mixture of the hydrophobic treated colloidal silica and the disilazane compound, the siloxane compound or the mixture thereof; and heating the mixture at a temperature of 50 to 100°C for aging it to make an organic phase containing the hydrophobic treated colloidal silica separate from an aqueous phase.

2. The process according to claim 1, wherein the aqueous silica sol has a SiO₂ concentration of 5 to 55 mass%.

3. The process according to claim 1 or 2, wherein hexamethyldisilazane is used as the disilazane compound in step (A).

4. The process according to claims 1 to 3, wherein hexamethyldisiloxane is used as the siloxane compound in step (B).

5. The process according to claim 1, wherein a siloxane compound represented by formula (2) is used in step (B), said process further including the drying step (C):
(C): drying the organic phase containing the hydrophobic treated colloidal silica obtained in the step (B).

6. The process according to claim 5, wherein hexamethyldisilazane is used as the disilazane compound in the step (A).

7. The process according to claim 5 or 6, wherein hexamethyldisiloxane is used as the siloxane compound in the step (B).

## Patentansprüche

1. Verfahren zur Herstellung eines hydrophoben Silicapulvers, umfassend die Schritte (A) und (B):
(A): hydrophober Behandlungsschritt des Zugebens eines wässrigen Kieselsols, das hydrophiles kolloidales Silica mit einer spezifischen Oberfläche von 5,5 bis 550 m²/g enthält, einer durch die Formel (1) dargestellten Disilazanverbindung
(R¹₃Si)₂NH (1),
worin jedes R¹ eine C₁₋₆-Alkylgruppe oder Phenylgruppe ist, die unabhängig voneinander ausgewählt wird, in einer Menge von 0,1 bis 10 mmol auf eine Oberfläche des hydrophilen kolloidalen Silicas von 100 m², um eine erste Mischung aus dem wässrigen Kieselsol und der Disilazanverbindung zu erhalten;
(B): Phasentrennungsschritt des Zugebens einer durch die Formel (1) dargestellten Disilazanverbindung
(R¹₃Si)₂NH (1),
worin jedes R¹ eine C₁₋₆-Alkylgruppe oder Phenylgruppe ist, die unabhängig voneinander ausgewählt wird,
einer durch die Formel (2) dargestellten Siloxanverbindung
R²₃SiO(R²₂SiO)ₙSiR²₃ (2),
worin jedes R² eine C₁₋₆-Alkylgruppe oder Phenylgruppe ist, die unabhängig voneinander ausgewählt wird, und n eine ganze Zahl von 0 bis 3 ist, oder einer Mischung davon zu dem in Schritt (A) erhaltenen hydrophob behandelten kolloidalen Silica in einer Menge von 1 bis 100 Massenanteilen pro 100 Massenanteile des als Ausgangsmaterial verwendeten hydrophilen kolloidalen Silicas, um eine zweite Mischung aus dem hydrophob behandelten kolloidalen Silica und der Disilazanverbindung, der Siloxanverbindung oder der Mischung davon zu erhalten; und des Erhitzens der Mischung bei einer Temperatur von 50 bis 100°C zu ihrer Alterung, um eine organische Phase, die das hydrophob behandelte kolloidale Silica enthält, getrennt von einer wässrigen Phase zu erzeugen.

2. Verfahren gemäß Anspruch 1, worin das wässrige Kieselsol eine SiO₂-Konzentration von 5 bis 55 Massen-% aufweist.

3. Verfahren gemäß Anspruch 1 oder 2, worin Hexamethyldisilazan als Disilazanverbindung in Schritt (A) verwendet wird.

4. Verfahren gemäß den Ansprüche 1 bis 3, worin Hexamethyldisiloxan als Siloxanverbindung in Schritt (B) verwendet wird.

5. Verfahren gemäß Anspruch 1, worin eine durch die Formel (2) dargestellte Siloxanverbindung in Schritt (B) verwendet wird, wobei das Verfahren ferner den Trocknungsschritt (C) umfasst:
(C): Trocknen der organischen Phase, die das in Schritt (B) erhaltene hydrophob behandelte kolloidale Silica enthält.

6. Verfahren gemäß Anspruch 5, worin Hexamethyldisilazan als Disilazanverbindung in Schritt (A) verwendet wird.

7. Verfahren gemäß Anspruch 5 oder 6, worin Hexamethyldisiloxan als Siloxanverbindung in Schritt (B) verwendet wird.

## Revendications

1. Procédé de fabrication d'une poudre de silice hydrophobe, comprenant les étapes (A) et (B) :
(A) : de traitement hydrophobe d'addition à un sol de silice aqueux contenant une silice colloïdale hydrophile présentant une surface spécifique de 5,5 à 550 m²/g,
un composé disilazane représenté par la formule (1)
(R¹₃Si)₂NH (1)
dans laquelle chaque R¹ est indépendamment un groupe alkyle en C₁₋₆ ou un groupe phényle, dans une quantité de 0,1 à 10 mmoles par surface de 100 m² de la silice colloïdale hydrophile, pour obtenir un premier mélange du sol de silice aqueux et du composé disilazane;
(B) : étape de séparation de phase par addition à la silice colloïdale obtenue à l'étape (A) ayant subi le traitement hydrophobe
d'un disilazane représenté par la formule (1)
(R¹₃Si)₂NH (1)
dans laquelle chaque R¹ est indépendamment un groupe alkyle en C₁₋₆ ou un groupe phényle,
d'un siloxane représenté par la formule (2)
R²₃SiO(R²₂SiO)ₙSiR²₃ (2)
dans laquelle chaque R² est indépendamment un groupe alkyle en C₁₋₆ ou un groupe phényle, et n est un nombre entier de 0 à 3, ou un mélange de ceux-ci, en quantité de 1 à 100 parties en masse pour 100 parties en masse de la silice colloïdale hydrophile utilisée comme matériau de départ, pour obtenir un second mélange de la silice colloïdale ayant subi le traitement hydrophobe et du composé disilazane et du composé siloxane ou son mélange ; et chauffage du mélange à une température de 50 à 100°C pour maturation, afin d'obtenir une phase organique contenant la silice colloïdale traitée par traitement hydrophobe séparée d'une phase aqueuse.

2. Procédé selon la revendication 1, dans lequel le sol de silice aqueux a une concentration SiO₂ de 5 à 55 % en masse.

3. Procédé selon la revendication 1 ou 2, dans lequel on utilise l'hexaméthyldisilazane comme disilazane à l'étape (A).

4. Procédé selon la revendication 1 à 3, dans lequel l'hexaméthyldisiloxane est utilisé comme siloxane à l'étape (B).

5. Procédé selon la revendication 1, dans lequel un siloxane représenté par la formule (2) est utilisé à l'étape (B), ledit procédé comprenant de plus l'étape de séchage (C) :
(C) : séchage de la phase organique contenant la silice colloïdale traitée par traitement hydrophobe obtenue à l'étape (B).

6. Procédé selon la revendication 5, dans lequel l'hexaméthyldisilazane est utilisé comme disilazane à l'étape (A).

7. Procédé selon la revendication 5 ou 6, dans lequel l'hexaméthyldisiloxane est utilisé comme siloxane à l'étape (B).
